Europäisches Patentamt

European Patent Office

Office européen des brevets

(19)

(11) Publication number: **0 227 925 B1**

# EUROPEAN PATENT SPECIFICATION

(12)

(45) Date of publication of patent specification:
16.01.91 Bulletin 91/03

(51) Int. Cl.⁵: **H04N 1/028**

(21) Application number: **86115610.7**

(22) Date of filing: **11.11.86**

(54) **Document scanning apparatus.**

(30) Priority: **27.12.85 JP 293404/85**

(43) Date of publication of application:
**08.07.87 Bulletin 87/28**

(45) Publication of the grant of the patent:
**16.01.91 Bulletin 91/03**

(84) Designated Contracting States:
**DE FR GB IT**

(56) References cited:
**DE-A- 3 601 323**
**GB-A- 2 159 365**
**US-A- 3 560 086**
**US-A- 4 181 424**
**XEROX DISCLOSURE JOURNAL, vol.7, no.4, July/August 1982, New York R.POEHLEIN "Feed-On Flap For Document Handler", P.275**
**XEROX DISCLOSURE JOURNAL, vo.7, no.3, May/June 1982, New York T.B.MICHAELS, "Servo Control Of Copy Paper Registration", pages 135, 136**

(73) Proprietor: **International Business Machines Corporation**
**Old Orchard Road**
**Armonk, N.Y. 10504 (US)**

(72) Inventor: **Asada, Shigeki**
**2-12-4-103 Tsujidohnishikaigan**
**Fujisawa-shi Kanagawa-ken (JP)**
Inventor: **Hasegawa, Megumi**
**3-5-13-202 Katasekaigan**
**Fujisawa-shi Kanagawa-ken (JP)**

(74) Representative: **Atchley, Martin John Waldegrave**
**IBM United Kingdom Limited Intellectual Property Department Hursley Park**
**Winchester Hampshire SO21 2JN (GB)**

Note : Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid (Art. 99(1) European patent convention).

Jouve, 18, rue Saint-Denis, 75001 PARIS

## Description

The invention relates to a document scanning apparatus in which the position of a document support table relative to an optical system is detected during relative movement of the document support table and the optical system.

In a conventional document scanning apparatus which scans an image of a document supported on a document support table, a reference position of the document support relative to the optical system is detected during relative movement of the document support table and the optical system to control the scanning operation on the document. In a typical case, the optical system, including a light source, mirror and a CCD (Charge Coupled Device) sensor array, is fixed and the document support table is reciprocated relative to the optical system. Published Japanese unexamined patent application 58-124366, published on July 23, 1983 discloses an apparatus in which a slit pattern is provided on a border area of a document support table. A CCD sensor array has a first portion which senses the reflected light from the slit pattern, and a second portion which senses the reflected light from the document image, during the movement of the table. A control unit controls the movement of the document support table in response to the output signal of the CCD sensor array representing the slit pattern. The document scanning apparatus in the application JP-A-58-124366 requires the above-mentioned first portion of the CCD sensor array for the slit pattern, and increased width of the table, resulting in increasing the cost of the document scanning apparatus.

In order to reduce the cost of the apparatus, the inventors of the present invention had initially tried to replace the side slit marker by a reference position marker located near the top edge of a document area of the document support table. In this type of arrangement, the CCD sensor array assigned for the document image could also sense the reference position marker. In other words, the CCD sensor array first senses the reference position marker, and then senses the document image. But, this approach posed the problem that because the documents to be scanned could include unexpected patterns, the probability of occurrence of the same pattern in the documents as the pattern of the reference position marker could not be reduced to zero percent.

If the same pattern as the reference position mark appears in the document, the control unit of the document scan apparatus might erroneously determine the pattern of the document as the reference position mark, resulting in an error in the document scan. Accordingly, it is necessary to distinguish the reference position mark located within the field of view of the CCD sensor array for sensing the document image from the document image.

Document "Xerox Disclosure Journal, Vol. 7 n°4, July/August 1982, page 275, New-York" discloses a document handler on which a reference position marker is provided for optically detecting a lead and/or trail edge of a document. It does not disclose the optical detection method or device involved.

The invention seeks to provide an improved document scanning apparatus.

A document scanning apparatus comprising an optical system including a light source and an optical sensor array, which generates an output signal in response to incident light, a document support table, means to provide relative movement between the document support table and the optical system, is characterised according to the invention, by further comprising a reference position marker mounted on the document support table for directly reflecting light from the light source to the optical sensor array, the reference position marker being such that the light it reflects is of significantly higher intensity than the range of intensity of light reflected in the course of scanning a document, a comparator means coupled to the optical sensor array for comparing output signals of the optical sensor array with a threshold level to generate bi-level signals, and a control means for setting the threshold level of the comparator means to a first level which is exceeded by output signals of the optical sensor array only when it receives light reflected from the reference position marker.

Accordingly, the first portion of the CCD sensor array in the apparatus disclosed in the above-mentioned Japanese application 58-124366 is not required in apparatus embodying the present invention.

The threshold level in the comparator circuit is set to the high threshold level for sensing the reference position marker at the start of the relative movement of the document support table, and is set to a low threshold level for generating bi-level signals representing the image of the document after the reference position marker is recognised.

How the invention can be carried out will now be described by way of example, with reference to the accompanying drawings, in which :

Fig. 1 represents a document scanning apparatus embodying the present invention, with a front wall partially broken to show an optical system inside the apparatus ;

Fig. 2 shows the backside of a document support table of the document scanning apparatus of Fig. 1 facing the optical system ;

Fig. 3 is a block circuit diagram of the document scanning apparatus ;

Fig. 4 is a flow chart which indicates operational steps of the circuit of Fig. 3 ;

Figs. 5A and 5B indicate input signals of the comparator circuit and threshold levels in a marker recognition operation and a document scanning operation, respectively ;

Figs. 6A, 6B, 6C and 6D show a reference position marker with a skew to a CCD sensor array, and sampled output signals for recognising the reference position marker ;

Figs. 7A, 7B and 7C show cross-sections of alternative structures of the reference position marker ; and

Fig. 8 is a flow chart of the detailed operations for determining a threshold level for scanning an image of a document.

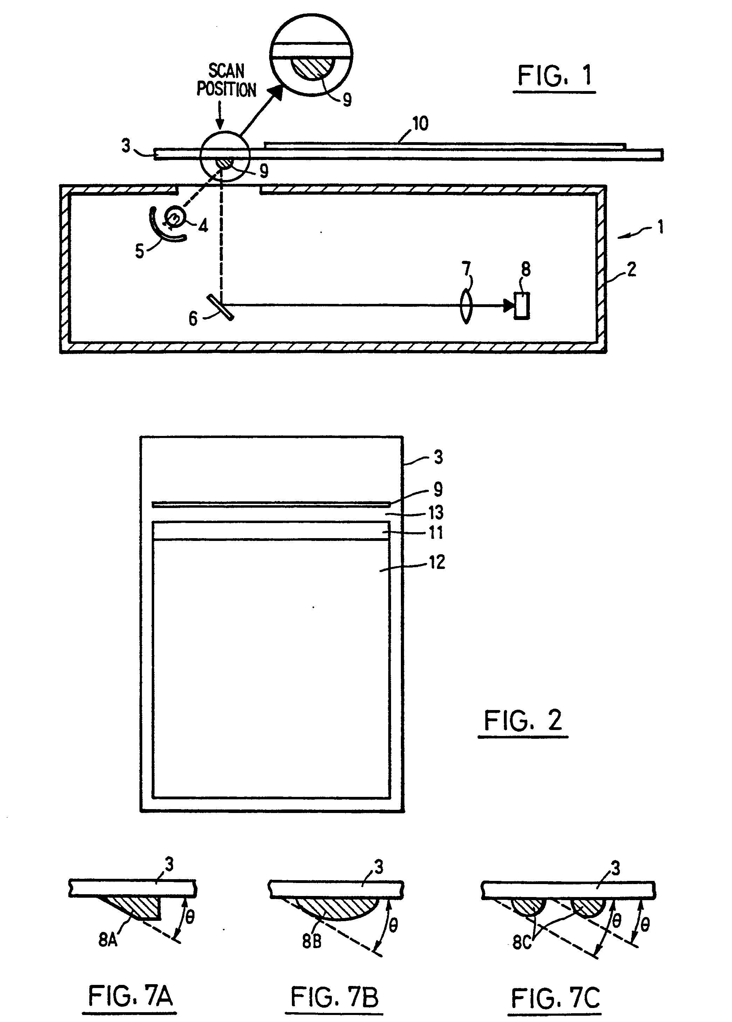

A document scanning apparatus 1 (Fig. 1) comprises a main frame 2 and a document support table 3. The document support table 3 is movably mounted on the main frame 2 by a guide and drive mechanism, not shown, to cause the document support table 3 to move relatively to the main frame 2. In this exemplary embodiment, the document support table 3 is reciprocally moved, while the optical system is stationarily mounted.

However, an alternative arrangement including a fixed document support table and a movable optical scan system could be also used to realise the desired relative movement. The optical system includes a light source such as a tungsten lamp 4, a reflector 5, a mirror 6, a lens 7 and a CCD sensor array 8. A document 10 is placed in the document support table 3 with an image of the document facing a glass platen in a document area 12 (Fig. 2) of the table 3.

Fig. 2 shows the backside of the document support table 3 on which a reference position marker 9 and a white band area 11 are mounted. The reference position marker 9 is positioned within the field of view of the CCD sensor array for sensing the image of the document.

The reference position marker 9 is parallel to the top edge of the white band area 11 and the document area 12. The structure and the function of the reference position marker 9 will be described later.

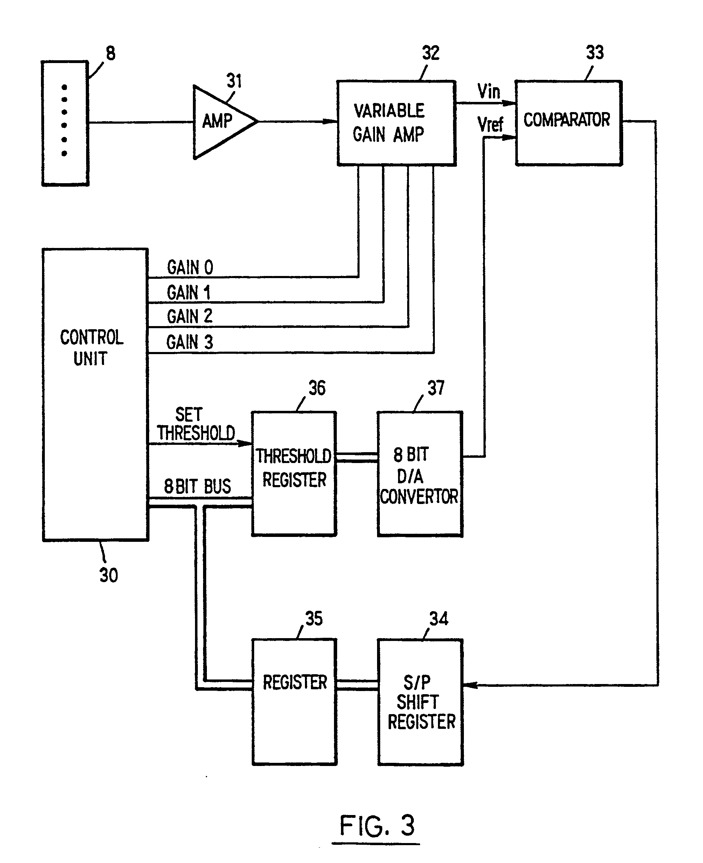

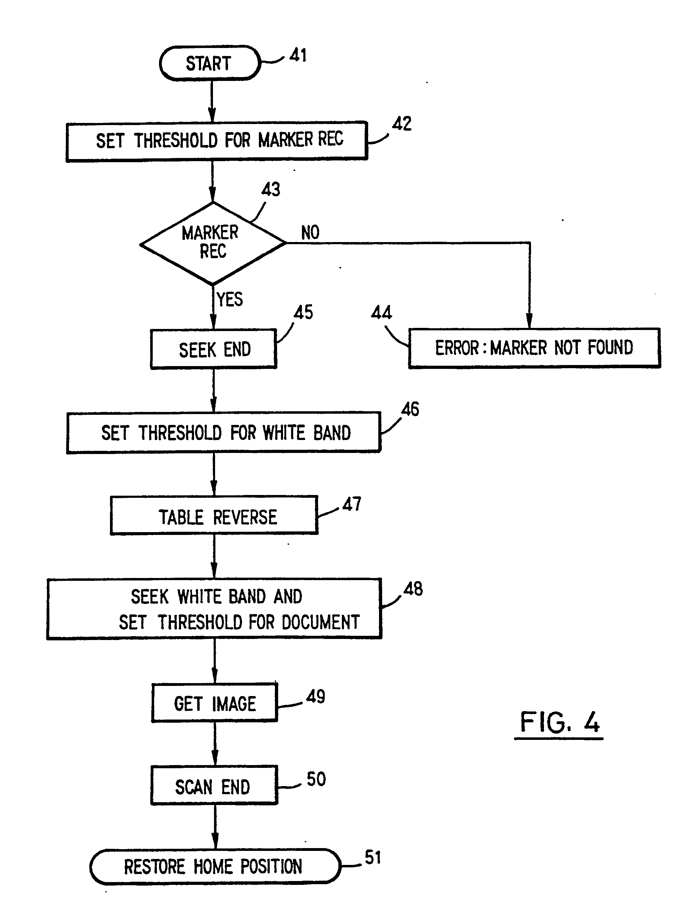

Fig. 3 is a block circuit diagram of the document scanning apparatus 1. The CCD sensor array 8 has, for example, 2048 small photoelectric conversion elements, each of which defines one pel (picture element) of an image of the document. Analog signals of the 2048 small photoelectric conversion elements are serially applied to the output line of the CCD sensor array 8, and then applied to a variable gain amplifier 32 through a pre-amplifier 31. The amplified analog signal for each pel is compared with a threshold voltage in a comparator circuit 33, which generates a "1" signal when the analog signal exceeds the threshold level, and generates a "0" signal when the analog signal is smaller than the threshold level, thus the analog signals are converted into bi-level video data. The serial bi-level data on the output line of the comparator circuit 33 are supplied to a serial/parallel shift register 34 which converts the serial bi-level data to eight bit parallel data. The eight bit parallel bi-level data are supplied to a register 35 from which the bi-level data are supplied to a control unit 30 through an eight bit data bus. The control unit 30 controls the gain of the variable gain amplifier 32 through gain control lines, supplies a threshold level to the comparator circuit 33 through a threshold register 36 and an eight bit digital/analog converter 37, and controls a stepping motor of the table drive mechanism, not shown, and the entire operations of the circuits described. The operations of the document scan apparatus 1 will now be described with reference to Figs. 3 and 4. The control unit 30 starts the document scanning operation in response to an operator depressing a start switch, not shown, or a start command sent from a host computer system, as shown in block 41 of Fig. 4.

The operation proceeds to a block 42 in which the control unit 30 sets the threshold level of the comparator circuit 33 to a high threshold level for finding the reference position marker 9 on the document support table 3 and moves the table 3 in the rightward direction.

The reference position marker 9 has a semi-circular cross section and a high reflectance surface to directly reflect light generated from lamp 4 to CCD sensor array 8 through the mirror 6 and the lens 7, whereby a stronger light than light reflected during the document image scan operation is directed to the CCD sensor array 8. The stronger light causes the CCD sensor array 8 to operate in its saturated range to generate a higher output signal level than the highest expected signal level during the document scanning operation. The reference position marker 9 has a semi-circular cross section by which an optical path for directing the high intensity light from the lamp 4 into the CCD sensor array 8 is necessarily established between the lamp 4 and the CCD sensor array 8. One example of the reference position marker 9 is a metal wire with a plated high reflectance surface and a diameter of 2 - 3mm. The marker 9 extends over the field of view of the CCD sensor array at a position spaced from the top edge of the white band area 11, as shown in Fig. 2.

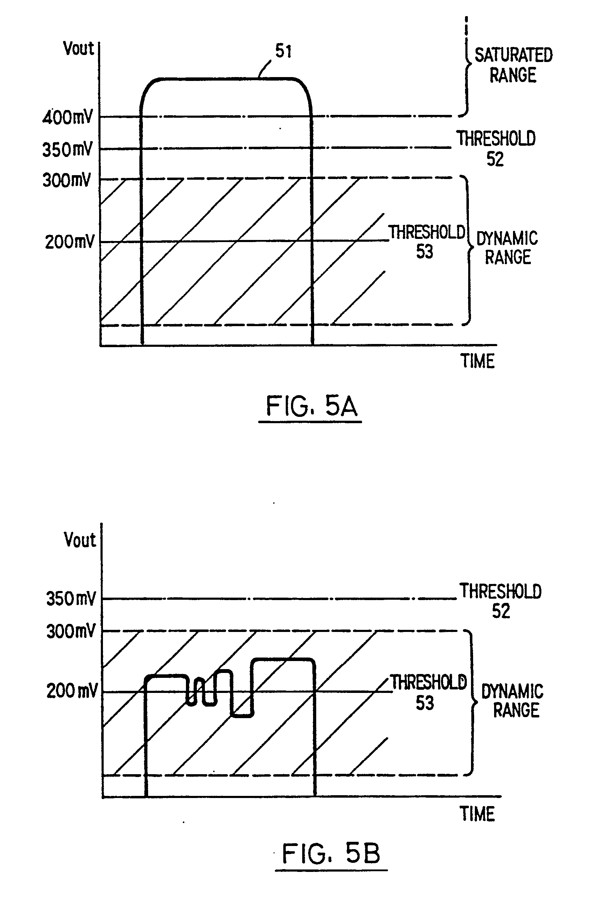

Fig. 5A shows an input analog signal 51 to the comparator circuit 33 which is generated when the light from the lamp 4 is directly projected into the CCD sensor array 8 and it becomes saturated ; and the high threshold level 52 which is selected so that it is exceeded by the signal 51, but not exceeded by the highest expected signal within the dynamic range of the CCD sensor array during the document scanning operation.

Returning to Fig. 4, the operation proceeds to a block 43 in which the control unit 30 determines the bi-level data supplied from the register 35 through the eight bit data bus. If the "1" signals exist over the length of the reference position marker 9, the control unit 30 judges that as a recognition of the marker 9, and the operation proceeds to block 45 wherein the seek operation for the marker 9 is terminated. If the marker 9 is not found, the control unit 30 handles it as an error, as shown in block 44.

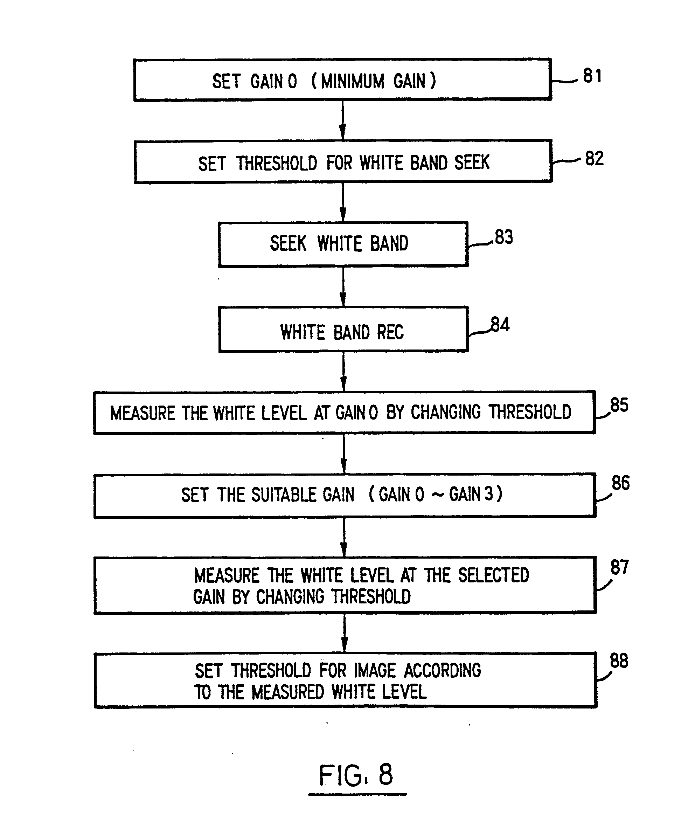

The operation proceeds to block 46 in which the control unit 30 sets into the comparator circuit 33 a threshold level for finding or seeking the white band area 11. Then, the control unit 30 stops the movement of the document support table 3 in the rightward direction and moves the table 4 in the leftward direction, in block 47. Next, the control unit 30 seeks the white band area 11, and sets a threshold level 53 for the document scanning operation, as shown in the Fig. 5B, in the comparator circuit 33. The operation of the blocks 46, 47 and 48 will be described in more detail later with reference to Fig. 8.

As the document support table 3 moves in the leftward direction in the scan position, the document 10 comes into the field of view of the CCD sensor array 8, and the bi-level data representing the image of the document is supplied to the control unit 30 from the register 35 through the eight bit data bus. When the document area 12 has been scanned, block 49, the table 3 is stopped, block 50, and the table 3 is restored to the home position, block 51. An example of the home position is a position in which the left edge of the table 3 in Fig. 1 is aligned with the left side wall of the main frame 2.

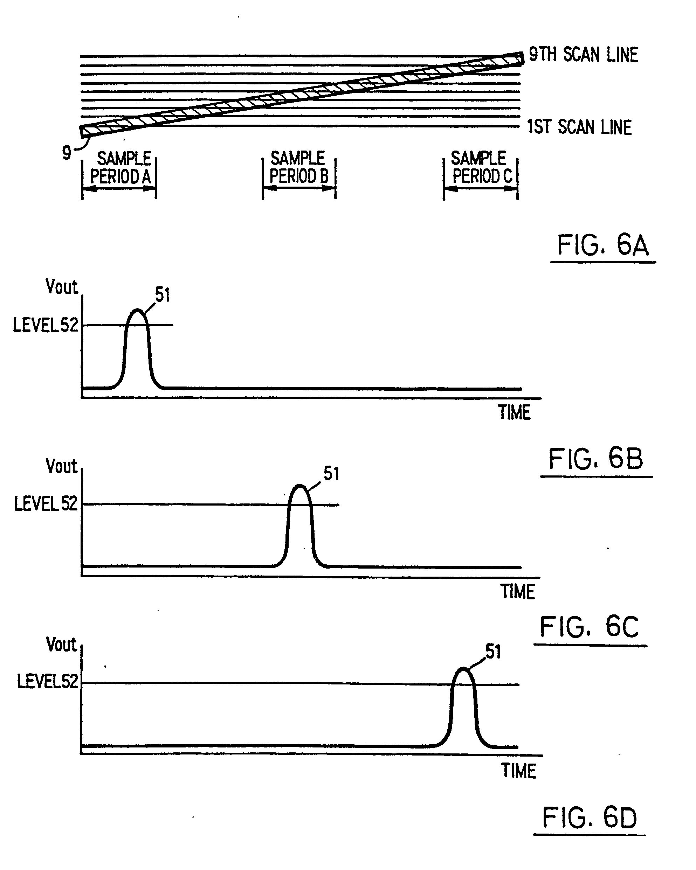

The Figs. 6A through 6D show the detection of the reference position marker 9 when it is skewed with respect to the CCD sensor array 8. Such a skew would be caused, for example, by a mechanical misarrangement over a long period of use of the guide and drive mechanism of the document support table 3. Fig. 6A shows the reference position marker 9 skewed over nine scan lines scanned by the CCD sensor array 8, with a reduced width of the marker compared with the space between the scan lines. The Figs. 6B, 6C and 6D show the analog signals 51 supplied to the comparator circuit 33 when the high intensity light generated from the lamp 4 is reflected to the CCD sensor array 8 by the high reflectance surface of the reference position marker 9 by which the CCD sensor array 8 is saturated to generate the high level output signal. The control unit 30 samples the bi-level output "1" of the comparator circuit 33 during the sample periods A, B and C in the marker recognition operation of block 43 of Fig. 4, described hereinbefore. The control unit 30 could find the top edge of the document area 12 based upon the time when the signal 51 is recognised during the sample period A, for example, since the control unit knows the distance between the marker 9 and the top edge of the document area 12 due to the number of steps of the stepping motor, so that the document scanning operation with the document scan threshold 53 (Fig. 5B) commences at the top edge of the document area 12. The area 13 located between the marker 9 and the white band area 11 (Fig. 2), is black, and its length in the direction of the table movement is selected to allow sufficient time for recovery of the CCD sensor array 8 from its saturated condition to its normal operating condition in the dynamic range.

Fig. 7 shows cross sections of alternative structures of the reference position marker 9. As stated above, the function of the marker 9 is to directly reflect the high intensity light from the lamp 4 to the CCD sensor array, to cause the CCD sensor array 8 to operate in its saturated operational range. To this end, the marker 9 is provided with the high reflectance surface and the surface angle θ in the cross section to establish the optical reflection path of the high intensity light from the lamp 4 to the CCD sensor array 8. The marker 8A has a flat surface at the angle θ. The marker 8B has a semi-elliptical cross section, and the marker 8C has a pair of semi-elliptical structures placed in parallel which cause the high intensity light to be reflected twice for marker recognition as the table 3 is moved, and the control unit 30 senses a twice-generated bi-level "1" as the marker signal.

Although, in the described embodiment, the marker 9 extends over a length corresponding to the total width of the document, parallel to the top edge of the white band area 11, a shorter marker than the marker 9 shown in Fig. 2 could be placed in positions corresponding to the sample periods A, B and C shown in Fig. 6A.

In the document scanning operation, the light from the lamp 4 is projected into the CCD sensor array by diffuse reflection or irregular reflection at the document surface, so that the light intensity due to the diffuse reflection in the document scanning operation is significantly lower than the high intensity light in the marker recognition operation, as shown in Figs. 5A and 5B.

Fig. 8 is a flow chart for explaining the detailed operation of the blocks 46 - 48 in Fig. 4.

In block 81, the control unit 30 sets the gain of the variable gain amplifier 32 to the gain "0" which is the minimum gain for the amplifier.

In block 82, the control unit 30 sets a threshold level for searching a white level in the threshold register 36. The level is converted to an analog level by the digital/analog converter 37, and the analog threshold level is applied to the Vref input of the comparator circuit 33. The threshold level for searching the white level is a level that is lower than a white level signal applied to the Vin input of the comparator circuit 33 through the variable gain amplifier 32, the gain of which is set to gain "0". As the document support table 3 moves in the rightward direction, the white band area 11 approaches the scan position. Since the area 13 is scanned until the top of the white band area 11 reaches the scan position, the output signals of the comparator circuit 33 remain at the "0" level. When the top edge of the white band area 11 crosses the scan position, the output signals of the comparator circuit 33 change to the "1" level. The control unit 30 detects this transition as the arrival of the white band area 11 at the scan position, as shown in blocks 83 and 84. In block 85, the control unit 30 measures the white level of the white band area 11 by varying the threshold level with the gain of the variable gain amplifier 32 maintained at the gain "0", detecting a transition from "1" to "0" of the bi-level output signals of the comparator circuit 33, and deciding a threshold level at which the transition is detected as the white level of the white band area 11.

In block 86, the control unit 30 selects from gains 0 - 3 a suitable gain of the variable gain amplifier 32 to amplify the output signal of the CCD sensor array 8 for accommodating the amplified output signal within an input range of the comparator circuit 33, so that output signals of a CCD sensor array with an unknown sensitivity are adjusted to the input range of the comparator circuit 33.

In block 87, the control unit 30 measures the level of the white band area 11 at the selected gain by varying the threshold level with the selected gain, detecting a transition between" "1" and "0" of the bi-level output signals of the comparator circuit 33, and deciding a threshold level at which the transition is detected as the white level of the white band area 11.

In block 88, the control unit 30 sets the threshold for the image of the document in accordance with the measured white level.

## Claims

1. A document scanning apparatus comprising : an optical system including a light source (4) and an optical sensor array (8), which generates an output signal in response to incident light, a document support table (3), means to provide relative movement between the document support table and the optical system, the apparatus being characterised by further comprising a reference position marker (9) mounted on the document support table for directly reflecting light from the light source to the optical sensor array, the reference position marker being such that the light it reflects is of significantly higher intensity than the range of intensity of light reflected in the course of scanning a document, a comparator means (33) coupled to the optical sensor array for comparing output signals of the optical sensor array with a threshold level to generate bi-level signals, and a control means (30) for setting the threshold level of the comparator means to a first level which is exceeded by output signals of the optical sensor array only when it receives light reflected from the reference position marker.

2. A document scanning apparatus as claimed in Claim 1, in which the optical sensor array is a CCD (Charge Coupled Device) sensor array.

3. A document scanning apparatus as claimed in Claim 1 or Claim 2, in which the reference position marker is an elongate body having a rounded cross section with a surface of high reflectance.

4. A document scanning apparatus as claimed in Claim 3, in which the reference position marker is positioned parallel to the top edge of a document area of the document support table.

5. A document scanning apparatus as claimed in any preceding Claim, in which the optical sensor array is such that it is saturated by the light reflected to it by the reference position marker.

6. A document scanning apparatus as claimed in any preceding claim, in which the control means is responsive to a start signal to set the threshold level of the comparator means to the first level which is exceeded by output signals of the CCD sensor array when operating in the saturated range, and is responsive to the detection of the reference position marker to replace the first threshold level by a second, lower threshold level which is such as to cause the comparator means to generate bi-level signals representing an image of a scanned document.

## Ansprüche

1. Dokumentenabtastgerät, enthaltend : ein optisches System mit einer Lichtquelle (4) und einer optischen Sensoranordnung (8), die, auf einfallendes Licht ansprechend, ein Ausgangssignal generiert, einen Dokumententrägertisch (3), Mittel, um eine relative Bewegung zwischen dem Dokumententrägertisch und dem optischen System herzustellen, wobei das Gerät dadurch gekennzeichnet ist, daß es ferner enthält : eine auf den Dokumententrägertisch montierte Bezugspositionsmarkiervorrichtung (9), um das Licht direkt von der Lichtquelle auf die optische Sensoranordnung zu reflektieren, wobei die Bezugspositionsmarkierung so beschaffen ist, daß das von ihr reflektierte Licht von wesentlich höherer Stärke ist als der beim Abtasten eines Dokuments reflektierte Lichtstärkenbereich, ein Vergleichermittel (33), das an die optische Sensoranordnung gekoppelt ist, um Ausgangssignale der optischen Sensoranordnung mit eier Schwelle zu vergleichen, um Signale in zwei Stufen zu generieren, und Steuermittel (30) für die Einstellung des Schwellenpegels des Vergleichermittels auf eine erste Stufe, die schwächer ist als die Ausgangssignale der optischen Sensoranordnung, aber nur, wen sie von der Bezugspositionsmarkierung reflektiertes Licht erhält.

2.      Dokumentenabtastvorrichtung      gemäß Anspruch 1, in der die optische Sensoranordnung eine CCD (lastgekoppelte) Sensoranordnung ist.

3. Dokumentenabtastvorrichtung gemäß Anspruch 1 oder Anspruch 2, in der das Bezugspositionsmarkiergerät ein länglicher Körper ist, der einen gerundeten Querschnitt und eine stark reflektierende Oberfläche besitzt.

4. Dokumentenabtastgerät gemäß Anspruch 3, in dem der Bezugspositionsmarkierer parallel zum oberen Rand einer Dokumentenzone des Dokumentenhaltertisches positioniert ist.

5. Dokumentenabtastgerät gemäß einem der vorangehenden Ansprüche, in dem die optische Sensoranordnung so beschaffen ist, daß sie durch das vom Bezugspositionsmarkierer auf sie reflektierte Licht gesättigt wird.

6. Dokumentenabtastgerät gemäß einem der vorangehenden Ansprüche, in denen das Steuermittel auf ein Startsignal anspricht, um die Schwellenhöhe des Vergleichermittels auf die erste Stufe einzustellen, die niedriger ist als die Ausgangssignale der CCD-Sensoranordnung, wenn im gesättigten Bereich gearbeitet wird, und die auf die Detektion der Bezugspositionsmarkierung anspricht, um die erste Schwelle durch eine zweite, niedrigere zu ersetzen, die so gewählt ist, daß sie bewirkt, daß das Vergleichermittel zweistufige Signale generiert, die das Bild eines abgetasteten Dokuments darstellen.

## Revendications

1. Analyseur de documents comprenant :
un système optique comportant une source de lumière (4) et un capteur-barrette optique (8) qui génère un signal de sortie en réponse à une lumière incidente,
une table porte-document (3) et un moyen pour produire un mouvement relatif entre la table portedocument et le système optique, l'analyseur étant caractérisé en ce que qu'il comprend en outre
un marqueur de position de référence (9) monté sur la table porte-document pour réfléchir directement la lumière venant de la source de lumière vers le capteur-barrette optique, le marqueur de position de référence étant agencé de manière que la lumière qu'il réfléchit soit d'une intensité nettement supérieure à la plage d'intensité de la lumière réfléchie au cours de l'analyse d'un document,
un moyen comparateur (33) couplé au capteur-barrette optique pour comparer les signaux de sortie du capteur-barrette optique avec un seuil, en vue de la génération de signaux à deux niveaux, et
un moyen de commande (30) pour ajuster le seuil du moyen comparateur à un premier niveau qui est dépassé seulement par les signaux de sortie du capteurbarrette optique lorsque celui-ci reçoit de la lumière réfléchie par le marqueur de position de référence.

2. Analyseur de documents selon la revendication 1, dans lequel le capteur-barrette optique est un capteur-barrette à transfert de charges.

3. Analyseur de documents selon la revendication 1 ou 2, dans lequel le marqueur de position de référence est un corps de forme allongée, possédant une section droite arrondie et une surface de haute réflectance.

4. Analyseur de documents selon la revendication 3, dans lequel le marqueur de position de référence est disposé parallèlement au bord supérieur d'une zone à document de la table porte-document.

5. Analyseur de documents selon l'une quelconque des revendications précédentes, dans lequel le capteurbarrette optique est agencé de manière qu'il soit saturé par la lumière réfléchie vers lui par le marqueur de position de référence.

6. Analyseur de documents selon l'une quelconque des revendications précédentes, dans lequel le moyen de commande est sensible à un signal de départ pour ajuster le seuil du moyen comparateur à un premier niveau qui est dépassé par des signaux de sortie du capteurbarrette à transfert de charges lorsque celui-ci fonctionne dans sa plage de saturation, et est sensible à la détection du marqueur de position de référence pour remplacer le premier niveau de seuil par un second niveau de seuil plus bas, qui est choisi pour que le moyen comparateur soit amené à générer des signaux à deux niveaux représentant une image d'un document analysé.

SCAN
POSITION

FIG. 1

FIG. 2

FIG. 7A

FIG. 7B

FIG. 7C

7

FIG. 3

START ⟵ 41

SET THRESHOLD FOR MARKER REC ⟵ 42

43
MARKER REC — NO → ERROR : MARKER NOT FOUND ⟵ 44

YES

SEEK END ⟵ 45

SET THRESHOLD FOR WHITE BAND ⟵ 46

TABLE REVERSE ⟵ 47

SEEK WHITE BAND AND
SET THRESHOLD FOR DOCUMENT ⟵ 48

GET IMAGE ⟵ 49

SCAN END ⟵ 50

RESTORE HOME POSITION ⟵ 51

## FIG. 4

FIG. 5A

FIG. 5B

9TH SCAN LINE

1ST SCAN LINE

9

| SAMPLE PERIOD A | SAMPLE PERIOD B | SAMPLE PERIOD C |

FIG. 6A

Vout

51

LEVEL 52

TIME

FIG. 6B

Vout

51

LEVEL 52

TIME

FIG. 6C

Vout

51

LEVEL 52

TIME

FIG. 6D

```
┌─────────────────────────────────────────────────┐
│         SET  GAIN 0  ( MINIMUM  GAIN )           │─ 81
└─────────────────────────────────────────────────┘
                         │
                         ▼
┌─────────────────────────────────────────────────┐
│       SET  THRESHOLD  FOR  WHITE  BAND  SEEK      │─ 82
└─────────────────────────────────────────────────┘
                         │
                         ▼
        ┌───────────────────────────────┐
        │        SEEK  WHITE  BAND       │─ 83
        └───────────────────────────────┘
                         │
                         ▼
        ┌───────────────────────────────┐
        │         WHITE  BAND  REC       │─ 84
        └───────────────────────────────┘
                         │
                         ▼
┌───────────────────────────────────────────────────────────┐
│ MEASURE THE WHITE LEVEL AT GAIN 0 BY CHANGING THRESHOLD    │─ 85
└───────────────────────────────────────────────────────────┘
                         │
                         ▼
┌───────────────────────────────────────────────────────────┐
│     SET  THE  SUITABLE  GAIN  ( GAIN 0 ~ GAIN 3 )          │─ 86
└───────────────────────────────────────────────────────────┘
                         │
                         ▼
┌───────────────────────────────────────────────────────────┐
│   MEASURE  THE  WHITE  LEVEL  AT  THE  SELECTED            │─ 87
│   GAIN  BY  CHANGING  THRESHOLD                            │
└───────────────────────────────────────────────────────────┘
                         │
                         ▼
┌───────────────────────────────────────────────────────────┐
│   SET  THRESHOLD  FOR  IMAGE  ACCORDING                    │─ 88
│   TO  THE  MEASURED  WHITE  LEVEL                          │
└───────────────────────────────────────────────────────────┘
```

## FIG. 8